# EUROPEAN PATENT APPLICATION

(11) **EP 2 492 537 A1**
(43) Date of publication of application: **29.08.2012**
(21) Application number: 10824750.3
(22) Date of filing: 17.09.2010
(51) Int. Cl.: F16F 15/02, B32B 27/00

(54) **VIBRATION DAMPING SHEET, METHOD FOR DAMPING VIBRATION OF VIBRATING MEMBER, AND METHOD FOR UTILIZING THE VIBRATING MEMBER**

(30) Priority: 20.10.2009 JP 2009241790
(71) Applicant: Nitto Denko Corporation, Osaka 567-8680 (JP)
(72) Inventor: KAWAGUCHI, Yasuhiko, Ibaraki-shi Osaka 567-8680 (JP)
(74) Representative: Schwabe - Sandmair - Marx
(86) International application number: PCT/JP2010/066150
(87) International publication number: WO 2011/048899

(57) **Abstract**

A vibration-damping sheet includes a resin layer having a glass transition temperature of more than 140°C and 180°C or less, and a constraining layer laminated on the resin layer.

## Description

### TECHNICAL FIELD

The present invention relates to a vibration-damping sheet, a method for damping vibration of a vibrating member, and a method for use thereof.

### BACKGROUND ART

Conventionally, various components used in the field of automobiles, railroad cars, home electric appliances, office equipment, household equipment, or working machinery easily cause vibrating sounds during its operation. Therefore, it has been known that, for example, by bonding a vibration-damping sheet including a resin layer to the component to prevent generation of the vibrating sounds, vibration-damping characteristics for the component are improved.

For example, Patent Document 1 below has proposed a vibration-damping sheet composed of a vibration-damping material for high temperature containing butyl rubber and C5 petroleum resin to achieve excellent vibration-damping properties under a temperature of about 40°C.

### Citation List

### Patent Document

Patent Document 1
Japanese Unexamined Patent Publication No. H9-136998

### SUMMARY OF THE INVENTION

### PROBLEM TO BE SOLVED BY THE INVENTION

In Patent Document 1 above, vibration-damping characteristics of a vibration-damping sheet under a normal temperature (about 20°C) and under a temperature of about 40°C are evaluated.

Meanwhile, there is a demand nowadays for improvement in vibration-damping characteristics for components used under a higher temperature, for example, cooling components immediately after termination of operation at high load.

However, with the vibration-damping sheet of Patent Document 1 above, sufficient improvement in vibration-damping characteristics for components under a temperature of more than 40°C may sometimes be difficult.

An object of the present invention is to provide a vibration-damping sheet having more improved vibration-damping characteristics under a temperature of more than 40°C, particularly at a temperature of 140°C or more and 180°C or less; a method for damping vibration of a vibrating member; and a method for use thereof.

### MEANS FOR SOLVING THE PROBLEM

A vibration-damping sheet of the present invention includes a resin layer having a glass transition temperature of more than 140°C and 180°C or less; and a constraining layer laminated on the resin layer.

In the vibration-damping sheet of the present invention, it is preferable that the resin layer contains a thermosetting resin, and it is preferable that the resin layer contains a thermoplastic resin.

In a method for damping vibration of a vibrating member in the present invention, the above-described vibration-damping sheet is bonded to a vibrating member.

In a method for using a vibrating member of the present invention, the above-described vibrating member to which a vibration-damping sheet is bonded is used at 140°C or more and 180°C or less.

### EFFECTS OF THE INVENTION

A vibration-damping sheet of the present invention includes a resin layer having a glass transition temperature of more than 140°C and 180°C or less, and therefore vibration-damping characteristics under a temperature near the glass transition temperature, for example, a temperature of 140°C or more and 180°C or less are improved.

Thus, with a method for damping vibration of a vibrating member of the present invention, in which the vibration-damping sheet of the present invention is bonded to a vibrating member, even if the vibrating member is used under a temperature of 140°C or more and 180°C or less, sufficient vibration damping can be achieved.

### BRIEF DESCRIPTION OF THE DRAWINGS

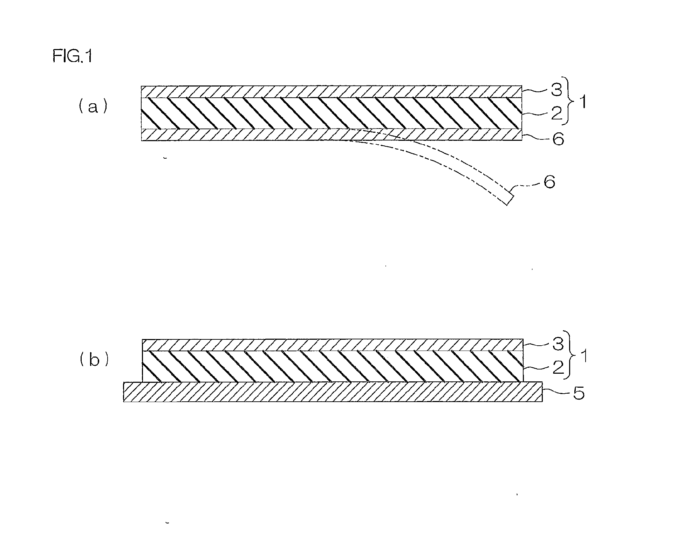

[FIG. 1] FIG. 1 is a diagram illustrating a method for bonding a vibration-damping sheet in one embodiment of the present invention to a vibrating member,
(a) illustrating a step of preparing a vibration-damping sheet, and releasing a releasing paper; and
(b) illustrating a step of bonding the vibration-damping sheet to the vibrating member.

### EMBODIMENT OF THE INVENTION

A vibration-damping sheet of the present invention includes a resin layer, and a constraining layer laminated on the resin layer.

The resin layer can be formed from a resin composition containing a thermosetting resin and/or a thermoplastic resin as a main component.

Examples of thermosetting resins include epoxy resin, urethane resin, phenolic resin, and urea resin. Preferably, epoxy resin is used in view of workability, storage stability, etc.

Curing reaction of these thermosetting resins are not caused before use, i.e., before heating after forming a vibration-damping material and bonding the vibration-damping material to the vibrating member; but these thermosetting resins are cured by heating when in use, so that a desired glass transition temperature is given.

Examples of epoxy resins include aromatic epoxy resins such as bisphenol epoxy resins (e.g., bisphenol A epoxy resin, bisphenol F epoxy resin, bisphenol S epoxy resin, hydrogenated bisphenol A epoxy resin, dimer-acid-modified bisphenol epoxy resin, etc.), dimer acid diglycidyl ester epoxy resin, polypropylene glycol diglycidyl epoxy resin, novolak epoxy resin (e.g., phenol novolak epoxy resin, cresol novolak epoxy resin, biphenyl epoxy resin, etc.), and naphthalene epoxy resin; nitrogen-containing-cyclic epoxy resins such as triepoxypropyl isocyanurate (triglycidyl isocyanurate), and hydantoin epoxy resins; glycidyl ether epoxy resins; and glycidyl amine epoxy resins.

The epoxy resin is liquid or solid at normal temperature, and has an epoxy equivalent of, for example, 100 to 750 g/eq., preferably 150 to 500 g/eq.

The epoxy resin can be blended with a curing agent and a curing accelerator.

Examples of curing agents include amide compounds such as dicyandiamide (DCDA); amine compounds such as polyamine; and isocyanate compounds. These curing agents can be used alone, or can be used in combination of two or more. Preferably, amide compounds are used.

The mixing ratio of the curing agent is, for example, a ratio that allows the reactive group (e.g., amino group) in the curing agent and the epoxy group in the epoxy resin to be equimolar amounts. To be specific, the mixing ratio of the curing agent is 1 to 15 parts by weight, preferably 1.2 to 7.0 parts by weight relative to 100 parts by weight of the epoxy resin. The curing agent can be used singly, or can be used in combination.

The curing accelerator is used in combination with a curing agent. Examples of curing accelerators include urea compounds (3-(3,4-dichlorophenyl)-1,1-dimethylurea: DCMU), imidazole compounds, tertiary amine compounds, and phosphorus compounds. Preferably, urea compounds are used.

The mixing ratio of the curing accelerator relative to 100 parts by weight of the epoxy resin is, for example, 0.5 to 2 parts by weight. The curing accelerator can be used singly, or can be used in combination.

The urethane resin is obtained by the reaction of isocyanate and a hydroxyl group-containing compound, and examples of isocyanates include aromatic diisocyanates such as tolylene diisocyanate (TDI), diphenylmethane diisocyanate (MDI), and derivatives thereof. Examples of hydroxyl group-containing compounds include polyols such as polypropylene glycol and polyethylene glycol.

Phenolic resins are obtained by the addition-condensation reaction of phenol and formaldehyde, and examples thereof include, to be specific, novolak phenolic resin and resol phenol.

The urea resin is obtained by the condensation reaction of urea and formaldehyde.

These thermosetting resins can be used singly, or can be used in combination of two or more. Preferably, an epoxy resin is used singly.

The glass transition temperature after curing of such a thermosetting resin is, for example, more than 140°C and 180°C or less, preferably 145°C or more and 170°C or less, more preferably 145°C or more and 160°C or less.

The mixing ratio of the thermosetting resin relative to 100 parts by weight of the resin composition is, for example, 100 parts by weight or less, preferably 90 parts by weight or less, more preferably 70 parts by weight or less, and usually 50 parts by weight or more.

The thermoplastic resin is, for example, a homopolymer composed of a single monomer and/or a copolymer composed of a plurality of monomers. To be specific, examples of thermoplastic resins include polycarbonate. Of these thermoplastic resins, preferably, noncrystalline thermoplastic resins are used.

As the thermoplastic resin, polycarbonates of the same type only can be used, or different types of polycarbonates can be used in combination.

Such a thermoplastic resin has a glass transition temperature of, for example, more than 140°C and 180°C or less, preferably 145°C or more and 170°C or less, more preferably 145°C or more and 160°C or less.

The mixing ratio of the thermoplastic resin relative to 100 parts by weight of the resin composition is, for example, 100 parts by weight or less, preferably 95 parts by weight or less, and usually 50 parts by weight or more.

As the resin composition, the thermosetting resin or the thermoplastic resin can be used singly, or the thermosetting resin and the thermoplastic resin can be used in combination. Preferably, a single thermosetting resin and a single thermoplastic resin are used.

A filler can be blended in the resin composition.

A filler is blended as necessary in view of reinforcement and handleability, and examples of fillers include calcium carbonate (e.g., calcium carbonate heavy, calcium carbonate light, Hakuenka), talc, mica, clay, mica powder, bentonite (including Organite), silica, alumina, aluminum silicate, titanium oxide, carbon black, acetylene black, glass powder, boron nitride, and metal powder (including aluminum powder). These fillers can be used singly, or can be used in combination.

A filler is blended preferably in the resin composition when the resin composition contains the thermosetting resin.

The mixing ratio of the filler relative to 100 parts by weight of the thermosetting resin and/or the thermoplastic resin is, for example, 10 to 150 parts by weight, preferably 25 to 100 parts by weight.

Furthermore, in addition to the above-described components, as necessary, the resin composition can contain known additives such as, for example, a thixotropic agent, a lubricant, a pigment, an antiscorch agent, a stabilizer, a softener, a plasticizer, an age resister, an antioxidant, a ultraviolet absorber, a coloring agent, an antifungal agent, a fire retardant, a tackifier, etc. at an appropriate ratio.

To form the resin layer of the present invention, first, the above-described components containing the thermosetting resin and/or the thermoplastic resin as a main component are kneaded at the above-described mixing ratio, using, for example, a mixing roll, a pressure kneader, or an extruder, thereby preparing a resin composition.

Then, the prepared resin composition is formed, for example, into a sheet by a molding method such as calendering, extrusion molding, or press molding at a predetermined temperature.

The molding temperature of the resin composition is, for example, when the resin composition contains a thermosetting resin as a main component, a temperature that does not cause the thermosetting resin to be cured, to be specific, for example, a room temperature (25°C) to 100°C. The molding temperature of the resin composition is, for example, when the resin composition contains a thermoplastic resin as a main component, a temperature near the melting point of the thermoplastic resin, to be specific, for example, 250°C or less, preferably 150 to 250°C.

The resin layer can be formed in this manner.

The thus formed resin layer (when the thermosetting resin is contained, the cured resin layer to be described later) has a glass transition temperature of more than 140°C and 180°C or less, preferably 145°C or more and 170°C or less, more preferably 145°C or more and 160°C or less.

The glass transition temperature is measured in conformity with the heat flux differential scanning calorimetry (heat flux DSC) of JIS K7121-1987.

The thus formed resin layer has a thickness of, for example, 0.2 to 5.0 mm, preferably 0.5 to 2.5 mm.
The resin layer has a thickness of, when the constraining layer has a modulus of elasticity (tensile modulus) of 10⁷ or more, preferably 0.2 to 3.0 mm, and when the constraining layer has a modulus of elasticity (tensile modulus) of below 10⁷, the resin layer has a thickness of preferably 1.0 to 5.0 mm.

The constraining layer constrains the resin layer, and attempts to improve vibration-damping characteristics and workability. The constraining layer is in sheet form, light and thin, and formed from a material that allows close contact and integration with the resin layer. Examples of such materials include glass fiber cloth, metal foil, fabric, and carbon fiber.

Glass fiber cloth is glass fiber made into fabric, and a known glass fiber cloth is used. Examples of glass fiber cloth include resin-impregnated glass fiber cloth. The resin-impregnated glass fiber cloth is a glass fiber cloth as described above impregnated with synthetic resins such as a thermosetting resin or a thermoplastic resin, and a known resin-impregnated glass fiber cloth is used. Examples of thermosetting resins include epoxy resin, urethane resin, phenolic resin, melamine resin, and urea resin. Examples of thermoplastic resins include polyvinyl acetate, ethylene-vinyl acetate copolymer (EVA), polyvinyl chloride, and EVA-polyvinyl chloride copolymer. These thermosetting resins, and thermoplastic resins as described above can be used alone or in combination. Alternatively, a mixture of a thermosetting resin and a thermoplastic resin can also be used.

Examples of metal foils include known metal foils such as aluminum foil and steel foil.

Examples of fabrics include woven cloth and nonwoven fabric made of synthetic resin fiber or natural fiber.

Of these examples of the constraining layer, preferably, glass fiber cloth is used in view of weight, close contact, strength, and costs.

Such a constraining layer has a thickness of, for example, 0.05 to 2.0 mm, preferably 0.1 to 0.5 mm.

The constraining layer has a modulus of elasticity (tensile modulus) of, for example, 10⁷ Pa or more (10⁷ to 10¹¹ Pa or less), or below 10⁷ (10⁵ Pa or more and below 10⁷ Pa).

Then, by bringing the above-described resin layer and the constraining layer together, the vibration-damping sheet of the present invention can be obtained.

A separator (releasing paper) can be bonded onto a surface (front side that is opposite to the reverse side to which the constraining layer is bonded) of the resin layer of the obtained vibration-damping sheet as necessary until actual use.

Next, a method of damping vibration with the vibration-damping sheet in one embodiment of the present invention is described with reference to FIG. 1.

In FIG. 1 (a), the vibration-damping sheet 1 includes, as described above, a resin layer 2 formed into a sheet from a resin composition; and a constraining layer 3 laminated on one side of the resin layer 2. A separator 6 is bonded onto the surface of the resin layer 2.

The vibration-damping sheet 1 can be cut into a suitable size in accordance with a size of a vibrating member 5, vibrations of which are to be damped.

Thereafter, the vibration-damping sheet 1 is bonded onto the vibrating member 5, thereby damping vibration of the vibrating member 5.

Examples of the vibrating member 5 include cooling components that are disposed near an engine compartment (engine room) of an engine that is operated at high load; and cooling components that are disposed near a motor, a condenser, or a transformer that is operated at high load. Immediately after termination of the operation, the vibrating member 5 has, for example, a temperature that is about the same as the glass transition temperature of the resin layer, to be more specific, 140°C or more and 180°C or less, 150°C or more and 175°C or less, and further 160°C or more and 170°C or less.

To bond the vibration-damping sheet 1 to the vibrating member 5, as shown by the phantom line in FIG. 1 (a), first, the releasing paper 6 is released from the surface of the resin layer 2, and then, as shown in FIG. 1 (b), the surface of the resin layer 2 is disposed on the surface of the vibrating member 5.

Thereafter, when the resin layer 2 contains a thermosetting resin, after bonding to the constraining layer 3, for example, by heating at 150 to 200°C, preferably at 160 to 190°C, for example, for 1 to 90 minutes, preferably for 10 to 60 min, the resin layer 2 is cured.

By thus curing the resin layer 2, the resin layer 2 is given the above-described desired glass transition temperature, and damping vibration of the vibrating member 5 is enabled.

On the other hand, when the resin layer 2 contains a thermoplastic resin, at the time of disposing onto the vibrating member 5, for example, the resin layer 2 is bonded to the vibrating member 5 by thermocompression bonding at the above-described temperature near the melting point of the thermoplastic resin. In this manner, the resin layer 2 is allowed to adhere (thermal fusion bonded) to the vibrating member 5, and to damp vibration of the vibrating member 5.

The vibration-damping sheet 1 includes a resin layer 2 having a glass transition temperature of more than 140°C and 180°C or less, and therefore vibration-damping characteristics at around their glass transition temperatures as mentioned above are improved.

Thus, with the method for damping vibration of the vibrating member 5 by bonding the vibration-damping sheet 1 to the vibrating member 5, even if the vibrating member 5 is used under the above-described temperature, sufficient vibration damping can be achieved.

### EXAMPLES

While the present invention is described in further detail with reference to Examples and Comparative Examples in the following, the present invention is not limited to any of them by no means.

### Examples 1 and 2 and Comparative Examples 1 to 2

Resin compositions were prepared in accordance with the mixing formulation shown in Table 1, by blending the components by parts by weight basis, and kneading the mixture with a mixing roll.

Then, the resin composition was press molded to be formed into a sheet, thereby forming a resin layer having a thickness of 2 mm. The press molding was carried out at 100°C in Example 1 and Comparative Example 1, and at 250°C in Example 2 and Comparative Example 2.

Then, a glass fiber cloth (Tensile Modulus: 10¹⁰ Pa, calculated from initial gradient of the stress-strain curve obtained at the time of measurement based on the tensile strength of JIS R 3420) having a thickness of 0.2 mm was brought together with the resin layer, and thereafter cut out into a size of 50 x 100 mm, thereby producing a vibration-damping sheet.

### Comparative Example 3

50 parts by weight of butyl rubber (butyl 268, manufactured by JSR CORPORATION), 75 parts by weight of C5 petroleum resin (Escorez 1202U, manufactured by JSR CORPORATION), 75 parts by weight of blown asphalt, and 800 parts by weight of calcium carbonate were kneaded with a pressure kneader, thereby preparing a resin composition, and then the prepared resin composition was press molded at 100°C, thereby forming a resin layer having a thickness of 2 mm.

Then, a glass fiber cloth (Tensile Modulus: 10¹⁰ Pa, calculated from initial gradient of the stress-strain curve obtained at the time of measurement based on the tensile strength of JIS R 3420) having a thickness of 0.2 mm was brought together with the resin layer, and thereafter cut out into a size of 50 x 100 mm, thereby producing a vibration-damping sheet.

### Evaluation

### (1) Glass Transition Temperature

First, the vibration-damping sheets of Example 1 and Comparative Example 1 were heated at 180°C for 30 minutes, thereby curing the resin layer.

Then, the glass transition temperatures of the resin layers of Examples 1 and 2, and Comparative Examples 1 to 3 were measured in conformity with the heat flux differential scanning calorimetry (heat flux DSC) of JIS K7121-1987.

Details of the measuring apparatus and the measuring conditions are shown below.

### Measuring Apparatus: TA instrument DSC Q-2000

### Measuring Conditions: temperature rising speed 10°C/min

### (2) Vibration-Damping Characteristics

The vibration-damping sheets of Examples 1 and 2 and Comparative Examples 1 to 3 were bonded to the center portion of a steel plate having a size of 100 × 250 mm and a thickness of 0.8 mm.

Then, for Example 1 and Comparative Example 1, the steel plate to which the vibration-damping sheet was bonded was heated at 180°C for 30 minutes, thereby curing the resin layer. The vibration-damping sheets of Example 2 and Comparative Examples 2 and 3 were thermocompression bond at 250°C, thereby allowing the resin layer to adhere (thermal fusion bonded) to the steel plate.

Thereafter, the steel plate to which the vibration-damping sheet of Examples 1 and 2 and Comparative Examples 1 to 3 was bonded was put into a dryer having the predetermined temperature shown in Table 1. Thereafter, after 30 minutes had elapsed, the steel plate was taken out from the dryer, and immediately thereafter, the steel plate was struck with a hammer, and vibration-damping characteristics were evaluated by auditory sense based on the following standards.

The steel plate with no vibration-damping sheet bonded thereto was struck with a hammer, and used as reference to the above-described vibration-damping characteristics evaluation.

Good: It was confirmed that the hammer sound decreased significantly compared with that of the reference steel plate.

Average: It was confirmed that the hammer sound decreased slightly compared with that of the reference steel plate.

Poor: It was confirmed that the hammer sound was not reduced in comparison with the hammer sound of the reference steel plate, and the sound was the same as in the case with the reference steel plate.

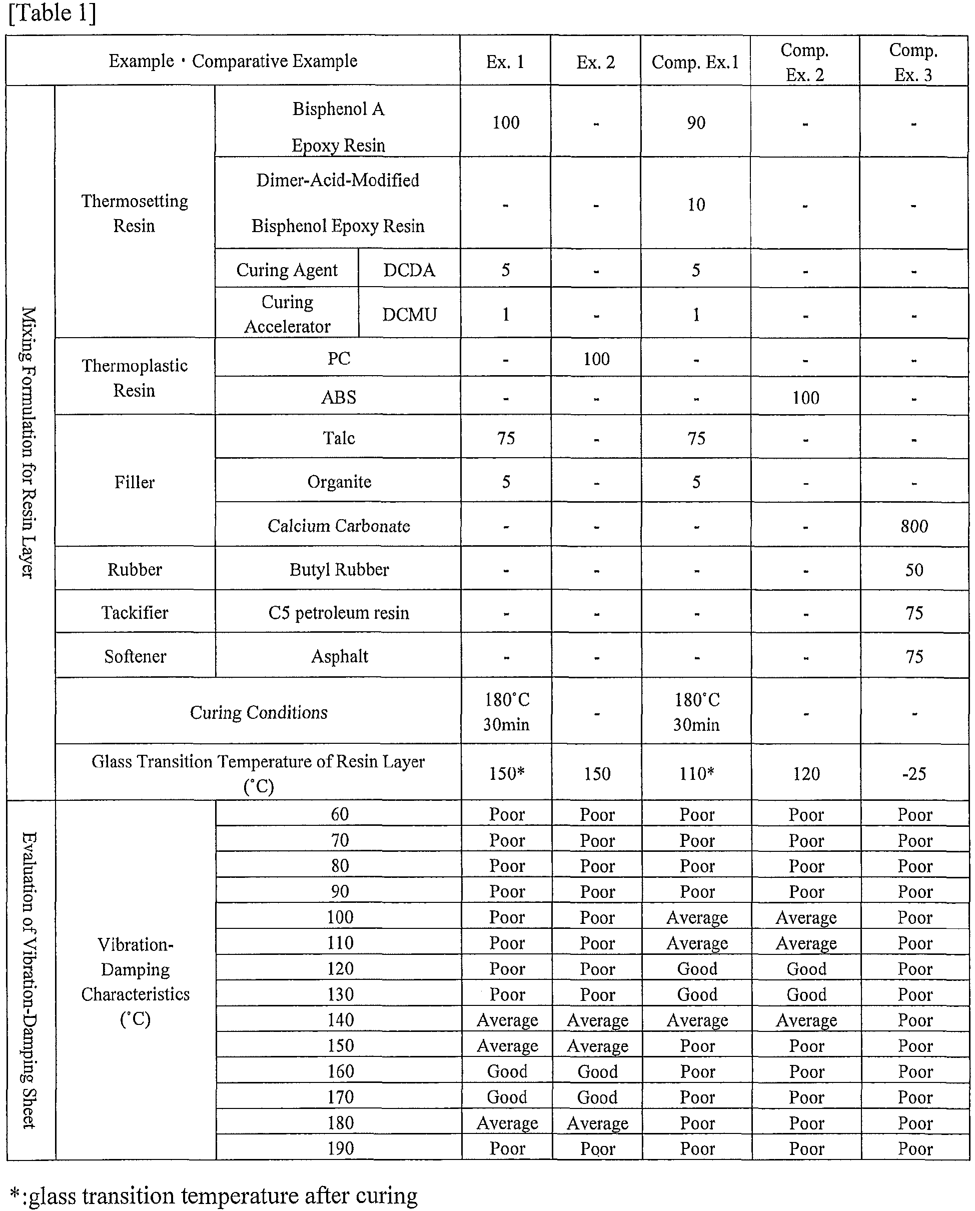

### Details of components and their abbreviations in Table 1 are shown below.

Bisphenol A epoxy resin: trade name "jER828", viscosity (25°C) 12 to 15 Pa · s, epoxy equivalent 184 to 194 g/eq., manufactured by Japan Epoxy Resins Co., Ltd.
Dimer acid-modified epoxy resin: trade name "jER871", viscosity (25°C) 0.4 to 0.9 Pa · s, epoxy equivalent 390 to 470 g/eq., manufactured by Japan Epoxy Resins Co., Ltd.
DCDA: dicyandiamide, manufactured by CVC
DCMU: trade name "DCMU99", 3-(3,4-dichlorophenyl)-1,1-dimethylurea, manufactured by Hodogaya Chemical Co., Ltd.
PC: polycarbonate
ABS: acrylonitrile-butadiene-styrene polymer resin
PC: polycarbonate
While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

A vibration-damping sheet of the present invention, a method for damping vibration of a vibrating member, and a method for use thereof can be applied for damping vibration of components used under high temperature, such as various cooling components.

## Claims

1. A vibration-damping sheet comprising:
a resin layer having a glass transition temperature of more than 140°C and 180°C or less; and a constraining layer laminated on the resin layer.

2. The vibration-damping sheet according to Claim 1, wherein the resin layer contains a thermosetting resin.

3. The vibration-damping sheet according to Claim 1, wherein the resin layer contains a thermoplastic resin.

4. A method for damping vibration of a vibrating member, the method comprising:
bonding a vibration-damping sheet to a vibrating member,
wherein the vibration-damping sheet comprises a resin layer having a glass transition temperature of more than 140°C and 180°C or less, and a constraining layer laminated on the resin layer.

5. A method for using a vibrating member, wherein the vibrating member to which a vibration-damping sheet is bonded is used at 140°C or more and 180°C or less,
the vibration-damping sheet comprising a resin layer having a glass transition temperature of more than 140°C and 180°C or less, and a constraining layer laminated on the resin layer.
